# EUROPEAN PATENT APPLICATION

(11) **EP 1 458 140 A1**
(43) Date of publication of application: **15.09.2004**
(21) Application number: 04002830.0
(22) Date of filing: 09.02.2004
(51) Int. Cl.: H04L 12/28, H04L 29/08

(54) **Private network system having a ubiquitous service function and method for operating the same**

(30) Priority: 12.03.2003 KR 2003015540
(71) Applicant: Samsung Electronics Co., Ltd., Suwon-city, Gyeonggi-do (KR)
(72) Inventor: Lee, Sung-hwan, Suwon-si Gyeonggi-do (KR)
(74) Representative: Grünecker, Kinkeldey, Stockmair & Schwanhäusser Anwaltssozietät

(57) **Abstract**

Disclosed is a private network system with a ubiquitous service function and a method for operating the same. The private network system with a ubiquitous service function includes: at least one aware-device (310) connected to one or more electronic appliances, in which the aware-device senses context information related to a user and an environment, and a service request command that is inputted into the aware-device; and a server (400) which acquires service data corresponding to the context information related to the user and the environment and the service request command, which are transmitted from the aware-device (310), and transmits the acquired service data to the aware-device (310). In addition, the server transmits the operation control signals for controlling the operation of the electronic appliances connected to the aware-device to the aware-devices, whereby the electronic appliances connected to the aware-device output service data based on the operation control signal.

## Description

### CROSS-REFERENCE TO RELATED APPLICATIONS

This application claims the benefit of Korean Patent Application No. 2003-15540, dated March 12, 2003, in the Korean Intellectual Property Office, the disclosure of which is incorporated herein by reference.

### BACKGROUND OF THE INVENTION

### 1. Field of the Invention

The present invention relates to a private network system, and in particular, to a private network system having a ubiquitous service function and a method for operating the system.

### 2. Description of the Related Art

"Ubiquitous" is a word which has a meaning of "being in existence anywhere and anytime, and in the recent communication technology, the word is used to mean an environment which enables a user to freely access a network regardless of where the user is.

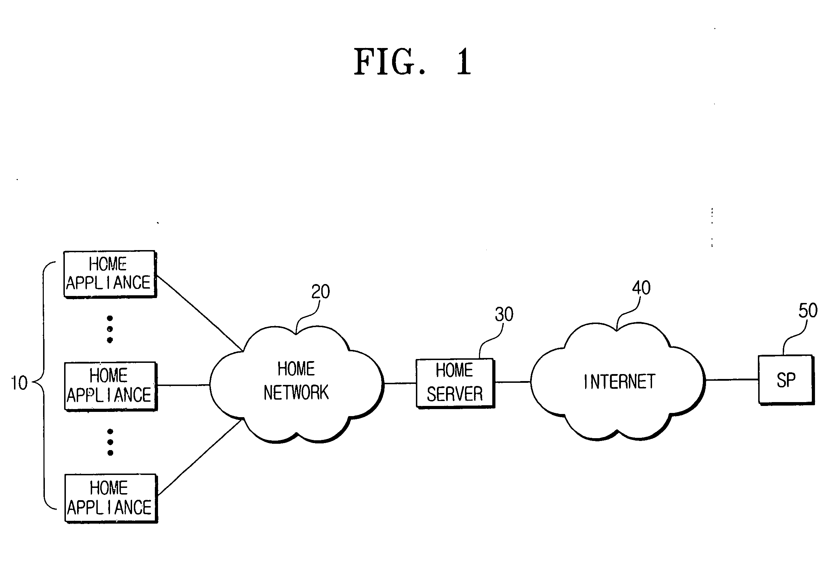

FIG. 1 schematically illustrates a structure of a home network system as an example of conventional private network system.

Referring to the drawing, home appliances 10 are interconnected with each other through a home network 20. The home network 20 is connected to a service provider (SP) 50 through a home server 30 and by way of Internet 40. Here, the home appliances 10 generally designate electronic appliances such as a digital TV, a facsimile, etc. which are connected to the home network 20. A user is allowed to use one home appliance 10 to manipulate another home appliance 10 connected to the home network 20. Furthermore, the user is provided with various services from the service provider (SP) through the home server 30.

The conventional home network system of the above-mentioned type is used in such a manner that a user manually and directly manipulates the network system.

For example, it is assumed that a user who has enjoyed a movie reproduced by a DVD player through a television set in a living room wishes to enjoy the movie through a computer placed in a study.

Firstly, the user requests the home server 30 to turn off the television 10 placed in the living room through the computer 10 placed in the study, and the home server 30 turns off the television 10 in response to the request. Next, the user manipulates the computer 10 in the study to request the movie, which has been reproduced in the living room, from the home server 30, and the home server 30 transmits the movie to the computer 10 in the study in response to the request. Like this, the user manually manipulates each of the home appliances 10 connected to the home network 20 in order to receive a desired service in a desired place.

That is, with the conventional private network system, the user is provided with a desired service by directly manipulating the private network system.

Therefore, there is a need for improving a private network system, in which a desired service is provided through the user's manual manipulation, to have a ubiquitous service function that is more human-centered technology.

### SUMMARY OF THE INVENTION

Accordingly, the present invention has been made to solve the above-mentioned problems occurring in the prior art, and one aspect of the present invention is to provide a private network system with a ubiquitous service function, which is capable of providing optimal services to the user, and a method for operating the same.

In order to achieve the above aspect, according to an aspect of the present invention, there is provided a private network system with a ubiquitous service function, the system comprising: at least one aware-device connected to one or more electronic appliances, in which the aware-device senses context information about a user and an environment and a service request command is inputted into the aware-device; and a server which acquires service data corresponding to the context information about the user and the environment and the service request command, which are transmitted from the aware-device, and transmits the acquired service data to the aware-device.

The server transmits operation control signals for controlling the operation of the electronic appliances connected to the aware-device on the basis of the context information about the user and the environment and the service request command, which are transmitted from the aware-device. Therefore, the aware-device transmits the operation control signals to the electronic appliances connected to the aware-device, whereby the operation of the electronic appliances is controlled.

Preferably, the aware-device comprises: a sensing unit for sensing the context information about the user and the environment; a device communication unit for performing data communication with the electronic appliances and the server connected thereto; a device control unit for processing the sensed context information about the user and the environment and the inputted service request command into predetermined data; and an output unit for outputting the service data transmitted from the server, to the electronic appliances.

The service request command is inputted into the aware-device by way of an input device of the electronic appliances and the sensing unit connected to the aware-device.

The device control unit controls the operation of the electronic appliances on the basis of the sensed context information about the user and the environment.

Preferably, the server comprises: a server communication unit for performing data communication with the aware-device and an external network; a storage unit for storing the context information about the user and the environment and information about the one or more electronic appliances connected to the aware-device; and a server control unit which acquires service data corresponding to the context information about the user and the environment and the service request command, which are transmitted from the aware-device, by using the storage unit and the external network, wherein the server control unit controls the server communication unit, so that the service data is transmitted to the aware-device.

The server control unit controls the operation of the one or more electronic appliances connected to the aware-device on the basis of the context information about the user and the environment and the service request command, which are transmitted from the aware-device.

The server control unit controls whether the service data should be outputted or not on the basis of the context information about the user and the environment, transmitted from the aware-device.

The server control unit selects an electronic appliance for outputting the service data and controls the operation of the selected electronic appliance, on the basis of the context information about the user and the environment and the service request command, which are transmitted from the aware-device. In addition, the server control unit converts the service data into a data format suitable for the selected electronic appliance.

More preferably, the private network system is a home network system, and the aware-device may be contained in one of the electronic appliances connected to the aware-device or separately provided.

According to another aspect of the present invention, there is provided a method for operating a private network system with a ubiquitous service function, comprising: a first step in which at least one aware-device senses context information about user and an environment aware-device connected to one or more electronic appliances and a service request command is inputted into the at least one aware-device; and a second step in which the context information about the user and the environment and the service request command are transmitted from the at least one aware-device to a server, and the server acquires service data corresponding to the context information about the user and the environment and the service request command, and transmits the acquired service data to the aware-device.

As a result, it is possible to provide the user with optimal services.

### BRIEF DESCRIPTION OF THE DRAWINGS

The above and other aspects, features and advantages of the present invention will be more apparent from the following detailed description taken with reference to the accompanying drawings, in which:
FIG. 1 is a structural view of a conventional home network system;
FIG. 2 is a block diagram of a ubiquitous network system according to the present invention;
FIG. 3 is a schematic block diagram of the aware-device shown in FIG. 2;
FIG. 4 is a schematic block diagram of the UB server shown in FIG. 2;
FIG. 5 is a general structural view of the ubiquitous network system according to the present invention;
FIG. 6 is an operation flowchart of the ubiquitous network system shown in FIG. 5; and
FIG. 7 is a flowchart which shows a procedure in which a video on demand (VOD) service is processed, as an example of service processed by the ubiquitous network system shown in FIG. 5.

### DETAILED DESCRIPTIONS OF THE PREFERRED EMBODIMENTS

The feature of ubiquitous service may be classified into two categories, i.e., context-aware service and seamless service.

The context-aware service is for sensing a user (human) and a surrounding environment (environment) and thereby providing an optimized service for the user, and the seamless service is for providing the user with an optimized service without being interrupted on the basis of the user and environment regardless of place and service formality.

Now, the present invention is described more detail with reference to the accompanying drawings.

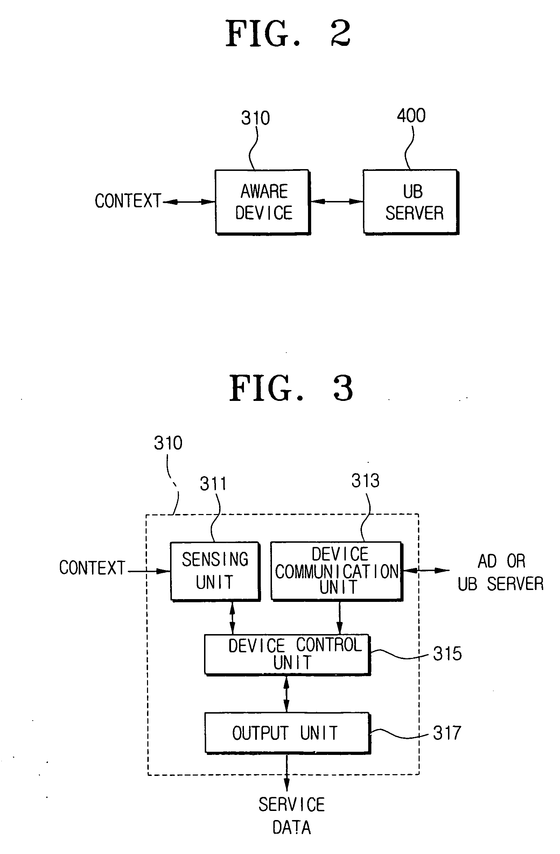

FIG. 2 is a schematic structural view of a private network communication system under the ubiquitous environment according to the present invention.

The private network system includes an aware-device 310 and a UB (ubiquitous) server 400.

The aware-device 310 is a device which senses the context information about the human and the environment and to which an operation command is inputted from a peripheral electronic appliance. The aware-device may be contained in the electronic appliance or provided as a separate device. For example, the aware-device may be a device such as sensor, etc.

That is, the aware-device (AD) 310 may be defined by i) an interactive function with context information which is information about a user and an environment, ii) communication between aware-devices, iii) communication with a UB server, and iv) sensing, communication, outputting and processing, and its functions can include i) sensing, ii) communication, iii) processing, iv) interfacing, and the like.

The UB server 400 manages and controls the aware-device 310, as a result of which electronic appliances connected to the aware-device are controlled. In addition, the UB server 400 provides various services through communication with an external network.

That is, the UB server 400 may be defined by i) management of an aware-device group, ii) connection with a group of other aware-devices, iii) connection with an external network, and iv) communication with any other UB server, and its functions can include i) processing, ii) interfacing, iii) storage, iv) agenting, and the like.

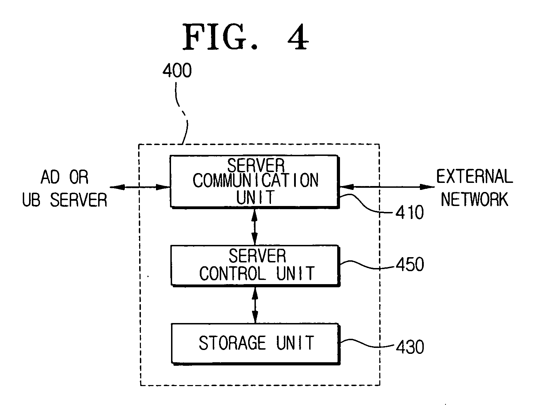

With reference to FIGs. 3 and 4, detailed description is made for the aware-devices (AD1, AD2, ..., And), and the UB server.

FIG. 3 is a block diagram which shows an aware-device (AD). The aware-device (AD) includes a sensing unit 311, a device control unit 315, a device communication unit 313, and an output unit 317.

The sensing unit 311 senses context information indicating the situation of an environment and a user (human).

With respect to the context information related to the user, the sensing unit can, for example, determine an object (e.g., determine a member of family), determine a user's action (speaking, reading, walking, running, etc.), bio-signal (blood pressure, heart rate, emotional condition, muscle relaxation, voice loudness, etc.), a user's control command (a service-requested item), and a user's situation information ("Who is with the user?," "Who is adjacent to the user?," etc.), and the like.

With respect to the context information related to the environment, the sensing unit senses, for example, spatial information (position, direction, velocity, etc.), time information (time, date, season, etc.), environment information (temperature, condition of air, condition of illumination, condition of noise, etc.), neighboring resource information (accessible device, etc.), and availability of resources (battery, display, network, bandwidth, etc.).

The device control unit 315 executes digitalization and transcoding of data and controls the whole operation of the aware-device depending on the situation.

The device communication unit 313 executes communication with a UB server 400 and inter-aware-device communication if it is not possible to process the service requested by the user.

The output unit 317 outputs service data, control signals for implementing the service data or the like from the aware-device.

FIG. 4 is a schematic block diagram of the UB server 400, which includes a server communication unit 410, a storage unit 430, a server control unit 450, etc.

The server communication unit 410 communicates with the aware-device 300 and an external network 500 under the control of the server control unit 450.

The storage unit 430 is stored with context information related to the aware-device 310, and a user and an electronic appliance connected to the network, in order to manage the network.

The server control unit 450 manages and controls a group of aware-devices 310 connected to the UB server 400, and also controls whether the external network 500 should be connected or not. In addition, the server control unit 450 controls the operation of a connected aware-device and also controls whether an electronic appliance connected to the aware-device 310 should be operated or not. Furthermore, the server control unit maintains and manages the context of a user and environment stored in the storage unit 430 and also manages and controls the network system so that general ubiquitous service is provided such that a data format transmitted to the aware-device 310 is transcoded to meet a given situation.

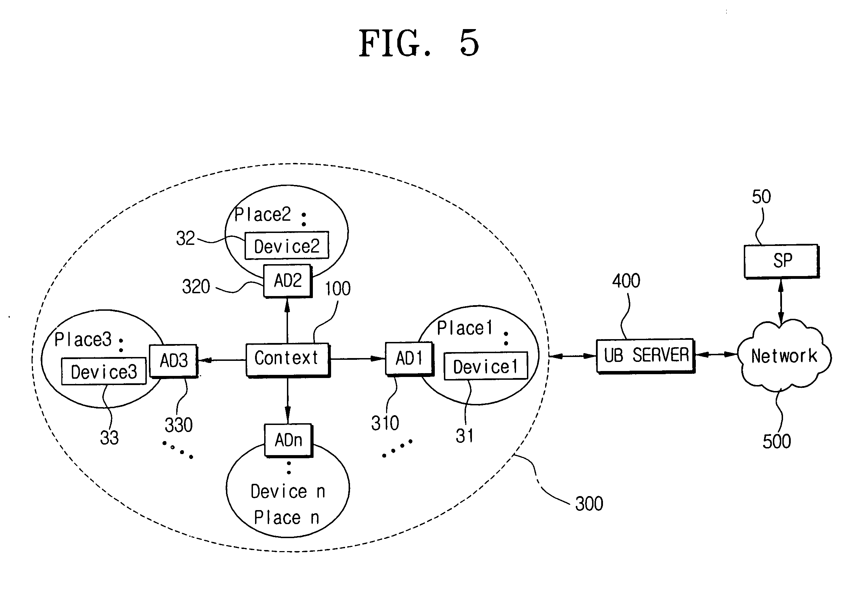

FIG. 5 schematically shows the structure of a network system having a ubiquitous service function according to the present invention.

A plurality of aware-devices (AD 1, AD 2, AD 3,..., AD n) 310, 320, 330, and so on, are interconnected to each other on the basis of the context information 100 related to the user and the environment, and the aware-network 300 is connected to a service provider (SP) 510 by way of the UB server 400 and through the external network 500.

The aware-devices 310, 320, 330, and so on are respectively provided in the areas (Place 1, Place 2, Place 3,..., Place n), and manage and control the electronic appliances (Device 1, Device 2, Device 3,..., Device n) placed in the areas (Place 1, Place 2, Place 3,..., Place n). Of course, a plurality of electronic appliances may be connected within each of the areas (Place 1, Place 2, Place 3,..., Place n).

In addition, the UB server 400 has information related to the electronic appliances connected to the aware-devices 310, 320, 330, and so on, whereby the UB server 400 will control whether any of the connected electronic appliances should be operated or not depending on a given situation.

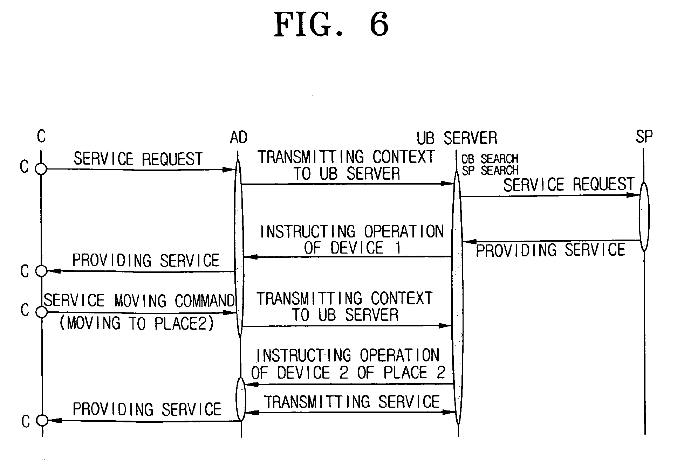

FIG. 6 is a conceptional view for illustrating an operating procedure of the ubiquitous service network system shown in FIG. 5. The general flow of operation is described with reference to FIG. 6.

From the user and the environment, the aware-device 310 of one area (Place 1) is inputted with one or more service request commands. That is, a service request command made by the user and a service request command made based on environment information are inputted. The service request commands are inputted either by an input device for the electronic appliances or by the aware-device sensing the context information C related to the user and the environment. If the service request commands are inputted, the aware-device 310 transmits the requested service to the UB server 400. In this case, if it is possible to process the requested service in the aware-device 310, the service data is provided to the user and the environment. However, if it is not possible, the service is requested from the UB server 400.

The UB server 400 searches whether the requested service is contained in the database of the UB server 400. If the corresponding service exists, it transmits the corresponding service data to the aware-device 310. Whereas, if the corresponding service does not exist in the database of the UB server 400, the UB server 400 accesses the service provider 50, which is capable of providing the corresponding service, through the external network 500 and the UB server receives the corresponding service data.

The UB server 400 selects an electronic appliance which is capable of outputting the service data obtained as described above. Then, the UB server 400 converts the service data into a data format suitable for the selected electronic appliance 31 and transmits the service data to the aware-device 310 along with operation control signals for controlling the operation of the selected electronic appliance 31. That is, the aware-device 310 operates the selected electronic appliance 31 using the transmitted operation control signals, and outputs the transmitted service data to the selected electronic appliance 31.

Therefore, the user and the environment are provided with the service data that each has requested, through the selected electronic appliance 31.

If the user moves the place for receiving the service from the first area (Place 1) to the second area (Place 2), a service moving command (e.g., "move to Place 2") of the user is inputted into the aware-device 310. The aware-device 310 transmits the service moving command to the UB server 400. The UB server 400 selects an electronic appliance, which is capable of processing the requested service data, among the electronic appliances in the second area (Place 2) and controls the operation of the selected electronic appliance 32. That is, the electronic appliance 32 is operated by way of the aware-device 320 and the service data is transmitted to the appliance 32. Of course, it is possible to convert the format of the service data into that suitable for the selected electronic appliance 32. Therefore, the user will receive the service data the user has requested through the electronic appliance 32 in the second area (Place 2), which is the moved to place.

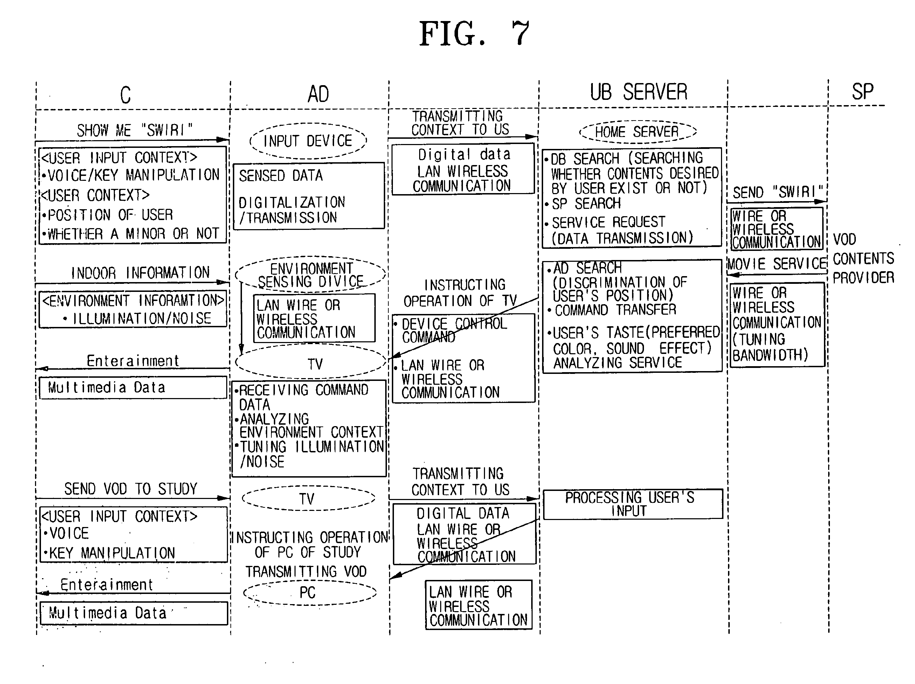

FIG. 7 is a flowchart of a service procedure, in which a home network system is applied as an example of a private network system having a ubiquitous service function according to the present invention. Referring to FIG. 7, description is made for a procedure for processing a conventional VOD (Video On Demand) service under the ubiquitous service environment.

Prior to the description of Fig. 7, the following is assumed.

First, a procedure is assumed in which the user requests a VOD service in order to see the movie, "Swiri" through the TV (Device 1) in the living room (Place 1) and thus the corresponding service is supplied.

The user may input a VOD service request command through the TV 31 in the living room (Place 1) or request the VOD service in a voice ("Show me Swiri!"). Hereinafter, the latter case will be described as an example. The aware-device acquires information about the position of the user and whether the user is a minor or not from the sensed user's context and also acquires information about environment context 100. Here, the environment context includes information about climate condition and natural condition such as illumination, noise and the like.

The aware-device 310 processes and transmits the sensed VOD service request command and the user context to the UB server, i.e., the home server 400. Hereinafter, the UB server is referred to as "home server." The home server 400 searches whether the requested VOD service (the movie, "Swiri") exists in the database in the home server 400. If the service does not exist, the home server 400 accesses the service provider 50 through the external network 500 and acquires the VOD service data.

The home server 400 analyzes the user context such as the position of the user, whether the user is a minor or not and the user's taste based on the context information provided from the aware-device 310. For example, if a minor requests a service of a movie impermissible to minors, the home server interrupts the service.

The home server 400 selects an electronic appliance capable of displaying the VOD service data ("Swiri") among the electronic appliances in the living room (Place 1) and operates the selected appliance, TV 31 by way of the aware-device 310. Thereafter, the requested VOD service data is outputted to the TV 31 by way of the aware-device AD1. Meanwhile, the aware-device 310 tunes the brightness and volume of the TV 31 on the basis of the sensed environment context, i.e., illumination, noise, etc. of the living room.

Second, it is assumed that the user moves to the study (Place 2) and continuously sees the movie that the user has been seeing in the living room (Place 2).

The user inputs a service moving command in order to continuously receive the VOD service in the study (Place 2) under the situation where the user receives the VOD service the user has requested through the TV 31 of the living room (Place 1). That is, the user inputs the service moving command using the input device of the TV 31 or a voice ("Send the VOD to the study!"). Here, the latter case is described as an example.

The VOD service moving command is inputted into the aware-device 310 provided in the living room (Place 1) and transmitted to the home server 400. The home server 400 selects the PC 32, which is a displayable electronic appliance, among the electronic appliances connected to the aware-device 320 provided in the study (Place 2), and then operates the PC 32 by way of the aware-device 320. Next, the requested VOD service data is outputted to the PC 32 through the aware-device 320.

If there is no displayable appliance among the electronic appliances in the study (Place 2), the home server 400 selects one electronic appliance, which can provide the minimum of the service, e.g., an audio appliance, and converts the VOD service data into a data format which can be processed by the audio appliance. That is, the home server 400 only extracts and outputs audio data from the VOD service data in the form of MPEG to the aware-device 320. Therefore, the aware-device 320 outputs the extracted data to the audio appliance, whereby the VOD service can be supplied to the user without being interrupted.

As described above, by providing a network system comprising one or more aware-devices for sensing context information related to a user and an environment within a predetermined area, it becomes possible to provide the user with a ubiquitous service.

According to the present invention, there is provided a network system comprising one or more aware-devices for sensing context information for a user and an environment within a predetermined area, whereby it is possible to obtain a private network system with a ubiquitous service function. As a result, it is possible to provide optimal services for the user.

While the preferred embodiments of the present invention have been shown and described with reference to the preferred embodiments thereof, the present invention is not limited to certain embodiments described above. It will be appreciated that various variant embodiments can be made by those skilled in the art without departing from the spirit and scope of the invention as defined by the appended claims. Such variant embodiments will belong to the scope of the present invention defined by the claims.

## Claims

1. A private network system with a ubiquitous service function comprising:
at least one aware-device connected to one or more electronic appliances, in which said at least one aware-device senses context information related to a user and an environment, and is inputted with a service request command; and
a server for acquiring service data corresponding to the context information related to the user and the environment and the service request command, which are transmitted from said at least one aware-device, and for transmitting the acquired service data to said at least one aware-device.

2. The system according to claim 1, wherein the server transmits operation control signals for controlling an operation of said one or more electronic appliances connected to said at least one aware-device based on the context information related to the user and the environment and the service request command, which are transmitted from said at least one aware-device.

3. The system according to claim 2, wherein said at least one aware-device transmits the operation control signals to said one or more electronic appliances connected to said at least one aware-device, whereby the operation of said one or more electronic appliances is controlled.

4. The system according to claim 1, wherein said at least one aware-device comprises:
a sensing unit for sensing the context information related to the user and the environment;
a device communication unit for performing data communication with said one or more electronic appliances and the server connected thereto;
a device control unit for processing the sensed context information related to the user and the environment, and the inputted service request command, into predetermined data; and
an output unit for outputting the service data transmitted from the server to at least one of said one or more electronic appliances,
wherein the device control unit individually controls the sensing unit, the device communication unit, and the output unit.

5. The system according to claim 4, wherein the service request command is inputted into said at least one aware-device by way of an input device of said at least one of said one or more electronic appliances and the sensing unit of said at least one aware-device.

6. The system according to claim 4, wherein the device control unit controls the operation of the electronic appliances based on the sensed context information related to the user and the environment.

7. The system according to claim 1, wherein the server comprises:
a server communication unit for performing data communication with said at least one aware-device and an external network;
a storage unit for storing the context information related to the user and the environment, and information related to the one or more electronic appliances connected to said at least one aware-device; and
a server control unit for acquiring the service data corresponding to the context information related to the user and the environment and the service request command, which are transmitted from said at least one aware-device, by using the storage unit and the external network, and for controlling the server communication unit to transmit the service data to said at least one aware-device.

8. The system according to claim 7, wherein the server control unit controls the operation of the one or more electronic appliances connected to said at least one aware-device based on the context information related to the user and the environment and the service request command, which are transmitted from said at least one aware-device.

9. The system according to claim 7, wherein the server control unit controls whether the service data should be outputted or not based on the context information related to the user and the environment transmitted from said at least one aware-device.

10. The system according to claim 7, wherein the server control unit selects at least one of the one or more electronic appliances for outputting the service data and controls the operation of the selected at least one of the one or more electronic appliances, based on the context information related to the user, the environment and the service request command, which are transmitted from said at least one aware-device.

11. The system according to claim 10, wherein the server control unit converts the service data into a data format suitable for the selected at least one of the one or more electronic appliances.

12. The system according to claim 1, wherein the private network system is a home network system.

13. The system according to claim 1, wherein said at least one aware-device is contained in one of said one or more electronic appliances.

14. A method for operating a private network system with a ubiquitous service function, comprising :
sensing, at at least one aware-device connected to one or more electronic appliances, context information related to a user and an environment, and inputting a service request command into the at least one aware-device; and
transmitting the context information related to the user and the environment and the service request command from the at least one aware-device to a server, and acquiring, at the server, service data corresponding to the transmission of the context information and the service request command, and transmitting the acquired service data to said at least one aware-device.

15. The method according to claim 14, wherein the server transmits operation control signals for controlling the operation of the one or more electronic appliances connected to the aware-device based on the context information related to the user and the environment, and the service request command, which are transmitted from said at least one aware-device.

16. The method according to claim 15, wherein said at least one aware-device transmits the operation control signals to the one or more electronic appliances connected to the aware-device, whereby the operation of the one or more electronic appliances is controlled.

17. The method according to claim 14, wherein the sensing step comprises:
sensing the context information related to the user and the environment and inputting the service request command;
processing the sensed context information related to the user and the environment and the inputted service request command, into predetermined data;
transmitting the predetermined data corresponding to the context information related to the user and the environment and the inputted service request command, to the server; and
outputting the service data transmitted from the server to the one or more electronic appliances.

18. The method according to claim 17, wherein in the processing step, an operation of the one or more electronic appliances is controlled based on the sensed context information related to the user and the environment.

19. The method according to claim 14, wherein the transmitting step comprises:
inputting the context information related to the user and the environment, and the service request data, which are data-processed by said at least one aware-device;
storing the context information related to the user and the environment and information about the one or more electronic appliances connected to the aware device;
acquiring the service data corresponding to the context information : related to the user and the environment and the service request command, which are transmitted from said at least one aware-device, by using a storage unit and an external network; and
outputting the service data to said at least one aware-device.

20. The method according to claim 19, wherein the acquiring step controls an operation of the one or more electronic appliances connected to said at least one aware-device based on the context information related to the user and the environment and the service request command, which are transmitted from said at least one aware-device.

21. The method according to claim 19, wherein the acquiring step controls whether the service data should be outputted or not based on the context information related to the user and the environment, transmitted from said at least one aware-device.

22. The method according to claim 19, wherein the acquiring step comprises selecting at least one of the one or more appliances for outputting the service data and controls an operation of the selected at least one of the one or more electronic appliances, based on the context information related to the user and the environment and the service request command, which, are transmitted from said at least one aware-device.

23. The method according to claim 22, wherein the acquiring step comprises converting the service data into a data format suitable for the selected at least one of the one or more electronic appliances.

24. The system according to claim 14, wherein the private network system is a home network system.

25. The system according to claim 14, wherein said at least one aware-device is contained in one of the one or more electronic appliances.
